# EUROPEAN PATENT APPLICATION

(11) **EP 4 550 479 A1**
(43) Date of publication of application: **07.05.2025**
(21) Application number: 23860921.8
(22) Date of filing: 31.08.2023
(51) Int. Cl.: H01M 4/62, H01M 4/1393, H01M 4/133, C08L 1/28, C08K 5/06, H01M 4/02

(54) **THICKENER DISPERSION, NEGATIVE ELECTRODE SLURRY COMPRISING SAME, NEGATIVE ELECTRODE, AND LITHIUM SECONDARY BATTERY**

(30) Priority: 02.09.2022 KR 20220111714
(71) Applicant: LG Energy Solution, Ltd., Seoul 07335 (KR)
(72) Inventor: NOH, Suk In, Daejeon 34122 (KR); LEE, Jun Won, Daejeon 34122 (KR)
(74) Representative: Hoffmann Eitle
(86) International application number: PCT/KR2023/013018
(87) International publication number: WO 2024/049246

(57) **Abstract**

The present invention provides a thickener dispersion including: a thickener including at least one among carboxymethyl cellulose and metal salt of the carboxymethyl cellulose; an change-over-time inhibitor; and an aqueous solvent, wherein the change-over-time inhibitor includes at least one selected from the group consisting of phenoxyethanol, sodium azide, paraben, formaldehyde, 5-chloro-2-methyl-4-isothiazolin-3-one, sodium benzoate, ethylhexylglycerin, and 1,2-hexanediol, the thickener is included in an amount of 0.05 wt% to 3.5 wt% in the thickener dispersion, and the inhibitor of changes over time is included in an amount of 0.05 wt% to 3.0 wt% in the thickener dispersion.

## Description

### TECHNICAL FIELD

### Cross-reference to Related Applications

This application claims the benefit of Korean Patent Application No. 10-2022-0111714, filed on September 02, 2022, in the Korean Intellectual Property Office, the disclosure of which is incorporated herein in its entirety by reference.

### Technical Field

The present invention relates to a thickener dispersion, a negative electrode slurry including the same, a negative electrode, and a lithium secondary battery including the same. More specifically, the present invention relates to a thickener dispersion with little change in viscosity over time, a negative electrode slurry including the thickener dispersion, and a negative electrode and a lithium secondary battery manufactured by using the negative electrode slurry.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used. Also, as an electrode for such high-capacity lithium secondary battery, research into a method for preparing an electrode having higher energy density per unit volume by improving electrode density has been actively conducted.

The lithium secondary battery generally includes a positive electrode, a negative electrode, a separator, and an electrolyte, wherein the positive electrode and the negative electrode may be prepared by applying a positive electrode slurry or a negative electrode slurry on a current collector and performing processes such as drying and rolling. Among them, the negative electrode slurry may be classified into an aqueous negative electrode slurry or an organic negative electrode slurry depending on the type of solvent used, and the aqueous negative electrode slurry is commonly used in a battery business in terms of process convenience and cost reduction.

Meanwhile, although lithium metal has been used as a negative electrode of the lithium secondary battery, a battery short circuit due to dendrite formation and the risk of explosion due to the battery short circuit have become a limitation, and the use of a carbon-based active material capable of reversible lithium ion intercalation and deintercalation, and maintaining structural and electrical properties has been emerged.

Since the carbon-based active material is not generally dispersed in an aqueous solvent (for example, water), the carbon-based active material is dispersed in the aqueous solvent by using a thickener such as carboxymethyl cellulose (CMC) in the aqueous negative electrode slurry, and viscosity of the aqueous negative electrode slurry is secured.

In this case, since the thickener such as carboxymethyl cellulose has a relatively low solubility to an aqueous solvent, the thickener may be added to an aqueous negative electrode slurry in the form of a thickener dispersion in which the thickener is previously dissolved in an aqueous solvent.

Such thickener dispersion may have to be stored for a predetermined period (for example, one week) according to various mass production conditions, and there may occur a limitation in that a change over time such as a decrease in viscosity of the thickener dispersion occurs during the storage process.

Changes over time in the thickener dispersion may cause limitations such as a decrease in the processability of the application process of the negative electrode slurry and a decrease in the quality of the negative electrode.

### DISCLOSURE OF THE INVENTION

### TECHNICAL PROBLEM

An aspect of the present invention provides a thickener dispersion that is easy to store due to a small change over time such as a decrease in viscosity.

In addition, another aspect of the present invention provides a negative electrode slurry, a negative electrode, and a lithium secondary battery having excellent processability and improved quality in manufacturing by using the above-described thickener dispersion.

### TECHNICAL SOLUTION

According to an aspect of the present invention, there is provided a thickener dispersion comprising a thickener including at least one among carboxymethyl cellulose and metal salt of the carboxymethyl cellulose; an change-over-time inhibitor; and an aqueous solvent, wherein the change-over-time inhibitor includes at least one selected from the group consisting of phenoxyethanol, sodium azide, paraben, formaldehyde, 5-chloro-2-methyl-4-isothiazolin-3-one, sodium benzoate, ethylhexylglycerin, and 1,2-hexanediol, the thickener is comprised in an amount of 0.05 wt% to 3.5 wt% in the thickener dispersion, and the change-over-time inhibitor is comprised in an amount of 0.05 wt% to 3.0 wt% in the thickener dispersion.

In addition, according to another aspect of the present invention, there is provided a negative electrode slurry including: a negative electrode active material; a binder; the above-described thickener dispersion; and an aqueous solvent.

In addition, according to still another aspect of the present invention, there is provided a negative electrode including a negative electrode active material layer formed by the above-described negative electrode slurry.

In addition, according to yet another aspect of the present invention, there is provided a lithium secondary battery including: the above-described negative electrode; a positive electrode; a separator interposed between the negative electrode and the positive electrode; and an electrolyte.

### ADVANTAGEOUS EFFECTS

The thickener dispersion of the present invention includes a thickener including carboxymethyl cellulose and at least one of metal salts of the carboxymethyl cellulose, an inhibitor of changes over time selected from a specific compound, and an aqueous solvent, wherein the thickener and the inhibitor of changes over time are adjusted to a specific content range. According to the above characteristics, in the thickener dispersion according to the present invention, limitations of changes over time such as a decrease in viscosity may be significantly prevented.

Therefore, in the case in which the thickener should be stored for a certain time under various mass-production conditions, there is little concern about changes over time, and thus the processability in the preparation of the negative electrode slurry may be improved, and accordingly, it is possible to implement the negative electrode and the lithium secondary battery having improved quality.

### BRIEF DESCRIPTION OF THE DRAWINGS

FIG. 1 is a graph showing changes in Brookfield viscosity over time of the thickener dispersions of Examples 1 to 5 and Comparative Examples 1 to 3.
FIG. 2 is a graph showing adhesion of negative electrodes manufactured using the thickener dispersions of Examples 1 to 5 and Comparative Examples 1 to 3.

### MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

The terminology used herein is for the purpose of describing particular exemplary embodiments only and is not intended to limit the present invention. As used herein, the singular forms, "a," "an," and "the" are intended to include the plural forms as well unless the context clearly indicates otherwise.

It will be understood that the terms "include," "comprise," or "have" when used in the specification, specify the presence of stated features, numbers, steps, elements, or combinations thereof, but do not preclude the presence or addition of one or more other features, numbers, steps, elements, or combinations thereof.

### <Thickener Dispersion>

The present invention relates to a thickener dispersion. The thickener dispersion may be preferably used in a negative electrode for a lithium secondary battery.

Specifically, the thickener dispersion includes: a thickener including at least one among carboxymethyl cellulose and metal salt of the carboxymethyl cellulose; an change-over-time inhibitor; and an aqueous solvent, wherein the change-over-time inhibitor includes at least one selected from the group consisting of phenoxyethanol, sodium azide, paraben, formaldehyde, 5-chloro-2-methyl-4-isothiazolin-3-one, sodium benzoate, ethylhexylglycerin, and 1,2-hexanediol, the thickener is included in an amount of 0.05 wt% to 3.5 wt% in the thickener dispersion, and the change-over-time inhibitor is included in an amount of 0.05 wt% to 3.0 wt% in the thickener dispersion.

The thickener dispersion of the present invention includes a thickener including carboxymethyl cellulose (CMC), an change-over-time inhibitor having the above-described characteristics, and an aqueous solvent, wherein the thickener and the change-over-time inhibitor are adjusted to a specific content range. According to the above characteristics, in the thickener dispersion according to the present invention, limitations of changes over time such as a decrease in viscosity may be significantly prevented.

Therefore, in the case in which the thickener should be stored for a certain time under various mass-production conditions, there is little concern about changes over time, and thus the processability in the preparation of the negative electrode slurry may be improved, and accordingly, it is possible to implement the negative electrode and the lithium secondary battery having improved quality.

### (1) Thickener

The thickener includes at least one among carboxymethyl cellulose (CMC) and metal salts of the CMC. The thickener may be used, for example, to easily disperse negative electrode active materials that are difficult to disperse in the aqueous negative electrode slurry, and to adjust the viscosity of the aqueous negative electrode slurry to a level that is easy to be applied.

The thickener may include at least one among carboxymethyl cellulose (CMC) and metal salt of the CMC, specifically, CMC. Meanwhile, the metal salt of the CMC may be one in which at least a part of hydrogen of -COOH present in the CMC is substituted with a metal ion. The metal ion may be, for example, at least one selected from the group consisting of Li⁺, Na⁺, and K⁺.

The weight average molecular weights of the CMC and the metal salts of the CMC may be each independently 1 million to 5 million, specifically 1.5 million to 4 million, and more specifically 1.7 million to 2.5 million. When the weight average molecular weight is within the above range, it is possible to prevent the limitation that the viscosity of the thickener dispersion is not maintained as the weight average molecular weight is excessively low while the viscosity of the thickener dispersion is increased to a desired level.

The thickener is included in an amount of 0.05 wt% to 3.5 wt% in the thickener dispersion. When the thickener is within the above range, the thickener may be easily dispersed or dissolved in an aqueous solvent. The thickener may be specifically included in an amount of 1 wt% to 3 wt%, more specifically 1.0 wt% to 2.3 wt%, and even more specifically 1 wt% to 2 wt% in the thickener dispersion.

### (2) Change-over-time inhibitor

The change-over-time inhibitor may be included in the thickener dispersion for suppressing changes over time, such as a decrease in viscosity, even when the thickener dispersion is stored for a certain time (for example, one week).

The change-over-time inhibitor may include at least one selected from the group consisting of phenoxyethanol, sodium azide, paraben, formaldehyde, 5-chloro-2-methyl-4-isothiazolin-3-one, sodium benzoate, ethylhexylglycerin, and 1,2-hexanediol, and specifically, may include at least one selected from the group consisting of phenoxyethanol, sodium azide, and 1,2-hexanediol in terms of excellent effect of maintaining viscosity of the thickener dispersion and low harmfulness to the human body, and more specifically, may include phenoxyethanol. Examples of the paraben may include butyl paraben (butyl parahydroxybenzoate), propyl paraben (propyl parahydroxybenzoate), ethyl paraben (ethyl parahydroxybenzoate), methyl paraben (methyl parahydroxybenzoate), and the like.

The change-over-time inhibitor is included in an amount of 0.05 wt% to 3.0 wt% in the thickener dispersion. When the change-over-time inhibitor is included less than 0.05 wt% in the thickener dispersion, the effect of maintaining viscosity of the thickener dispersion and the effect of preventing a decrease in viscosity are insignificant, and when the change-over-time inhibitor is included greater than 3.0 wt% in the thickener dispersion, limitations such as a decrease in energy density and an increase in battery resistance may be caused when the thickener dispersion is included in the negative electrode, therefore it is not preferable.

The change-over-time inhibitor may be specifically included in an amount of 0.3 wt% to 2.8 wt%, and more specifically in an amount of 0.7 wt% to 1.7 wt% in the thickener dispersion, and when the change-over-time inhibitor is within the above range, it is preferable in terms of the effect of preventing a change over time of the thickener dispersion and an energy density improvement and resistance reduction of a negative electrode and a lithium secondary battery manufactured using the thickener dispersion.

### (3) Aqueous Solvent

The thickener dispersion of the present invention includes an aqueous solvent as a solvent. As will be described later, since the thickener dispersion of the present invention is preferably used in the aqueous negative electrode slurry, it is preferable to use, as the solvent of the thickener dispersion, the same solvent as the aqueous solvent used as the aqueous negative electrode slurry solvent.

The aqueous solvent may be specifically water. For example, the aqueous solvent may be distilled water or deionized water (DI water).

In the present invention, the weight ratio of the thickener to the inhibitor of changes over time may be 1:0.025 to 1:1.25, specifically 1:0.15 to 1:1.15, and more specifically 1:0.35 to 1:0.85. When the weight ratio is within the above range, the components in the thickener dispersion may be preferably dissolved or dispersed while the effect of inhibiting the change over time of the thickener dispersion is preferably achieved.

In addition, the solid content in the thickener dispersion may be 0.1 wt% to 6.5 wt%, specifically 1.3 wt% to 5.5 wt%, more specifically 2.3 wt% to 4.7 wt%, even more specifically 2.5 wt% to 4.0 wt%, and even more specifically 2.8 wt% to 3.7 wt%. When the solid content is within the above range, the viscosities of the thickener dispersion and the negative electrode slurry to which the thickener dispersion is applied are adjusted to a desirable level, the processability may be improved, and the quality of the negative electrode may be improved.

In the present invention, the viscosity change rate (%) at 23 °C calculated by Equation 1 below of the thickener dispersion may be -20% to 0%, specifically -5% to 0%, and more specifically -3% to 0%. Viscosity change rate (%) = {(viscosity 7 days immediately after production of the thickener dispersion) - (viscosity immediately after production of the thickener dispersion)} / (viscosity immediately after production of the thickener dispersion) × 100

The viscosity change rate (%) is calculated by measuring the viscosity of the thickener dispersion at 23 °C.

The viscosity measured at the viscosity change rate may be measured using a Brookfield viscometer. The viscosity may be a Brookfield viscosity. Specifically, as the Brookfield viscometer, the DV2T viscometer manufactured by Brookfield may be used.

In Equation 1 above, "immediately after production of the thickener dispersion" may mean immediately after the thickener and the inhibitor of changes over time are added to the aqueous solvent and then dissolved or dispersed with a mixer. Specifically, the mixer may be BTM Mixer (e.g., BTM Mixer from Yoonsung F&C Co., Ltd.), and the dissolution (or dispersion) may be performed by agitation for 3 hours at a rotational speed of Anchor disper 50 rpm and Homo disper 1,000 rpm.

Also, the present invention provides a method for producing the thickener dispersion.

Specifically, a method for producing the thickener dispersion may include: preparing a mixture by adding a thickener and a change-over-time inhibitor to an aqueous solvent; and stirring the mixture.

The aqueous solvent, the thickener, and the change-over-time inhibitor have been described above.

The stirring of the mixture may be performed without limitation by using a known stirring method known in the art. Specifically, the stirring of the mixture may be performed using the BTM Mixer (e.g., BTM Mixer from Yoonsung F&C Co., Ltd.). The stirring conditions of the mixture are not particularly limited, but when the BTM Mixer is used, the stirring may be performed at a rotation speed of Anchor disper 10 rpm to 100 rpm, and more specifically, 40 rpm to 60 rpm and Homo disper 100 rpm to 2,000 rpm, and more specifically, 800 rpm to 1200 rpm.

The stirring of the mixture may be performed under a temperature condition in which physical properties, including viscosity of the mixture, do not change due to the evaporation of the aqueous solvent, and may be performed at a temperature of, for example, 50 °C or lower, more specifically, 5 °C to 50 °C, and still more specifically, room temperature (e.g., 23 °C).

The stirring of the mixture may be appropriately adjusted in consideration of the mass, volume, and the like of the mixture, and may be performed for, for example, 30 minutes or more, specifically 30 minutes to 10 hours, and more specifically, 1 hour to 5 hours.

### <Negative Electrode Slurry>

In addition, the present invention provides a negative electrode slurry including the above-described thickener dispersion.

Specifically, the negative electrode slurry includes a negative electrode active material; a binder; the above-described thickener dispersion; and an aqueous solvent.

The negative electrode active material may include at least one selected from among a carbon-based active material and a (metalloid-) metal-based active material, as a material capable of intercalating/deintercalating lithium.

Specifically, the negative electrode active material may include a carbon-based active material. In particular, the above-described thickener dispersion may exhibit excellent effects on a dispersion process of the carbon-based active material in the aqueous solvent.

The carbon-based active material may include at least one selected from the group consisting of artificial graphite, hard carbon, soft carbon, carbon black, graphene, and fibrous carbon, and more specifically may include graphite. The graphite may include, for example, at least one selected from the group consisting of natural graphite and artificial graphite.

The (metalloid-) metal-based active material includes at least one selected from the group consisting of: at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of at least one (metalloid) metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn. More specifically, the (metalloid-) metal-based active material may include at least one silicon-based active material selected from SiOₓ (0≤x<2) and a silicon-carbon composite.

The negative electrode active material may be included in the negative electrode slurry in an amount of 70 wt% to 99 wt%, and particularly, 80 wt% to 98 wt% based on a total weight of a solid content in the negative electrode slurry.

Next, the binder is for securing adhesion between the active materials or adhesion of the active material to a current collector, wherein common binders used in the art may be used, and types thereof are not particularly limited. The binder, for example, may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, a styrene-butadiene rubber (SBR), a fluorine rubber, or copolymers thereof, and any one thereof or a mixture of two or more thereof may be used. More specifically, the binder may include a styrene-butadiene rubber (SBR).

The binder may be included in the negative electrode slurry in an amount of 1 wt% to 10 wt%, and particularly, 1 wt% to 5 wt% based on a total weight of a solid content in the negative electrode slurry.

Next, the negative electrode slurry includes the above-described thickener dispersion.

With respect to the thickener dispersion, changes over time such as a decrease in viscosity may be suppressed to an excellent level. According to the present invention, since the change in viscosity of the thickener dispersion may be minimized even when the thickener dispersion is stored for a certain period of time according to various mass-production conditions, mass production, or the like, the negative electrode active material may be easily dispersed in the aqueous negative electrode slurry such that the processability of the negative electrode may be improved and at the same time, the quality of the negative electrode may be improved.

The thickener, the change-over-time inhibitor, and the aqueous solvent included in the thickener dispersion have been described above.

The thickener dispersion may be included in the negative electrode slurry such that the thickener is 0.5 wt% to 10 wt%, specifically 1 wt% to 5 wt%, based on the total weight of the solid content in the negative electrode slurry.

The aqueous solvent may be included in the negative electrode slurry to control the viscosity of the negative electrode slurry and improve the coatability. The aqueous solvent is used as a solvent for the negative electrode slurry and may be distinguished from the aqueous solvent included in the above-described thickener dispersion.

The aqueous solvent may be specifically water. For example, the aqueous solvent may be distilled water or deionized water (DI water).

The negative electrode slurry may further include a conductive agent together with the above-described components.

The conductive agent may be used to further improve the conductivity of the negative electrode active material. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives may be used. Specific examples of commercially available conductive agents include acetylene black series (products of Chevron Chemical Company, Denka Singapore Private limited, Gulf Oil Company, etc.), Ketjen black, EC-based series (products of Armak Company), Vulcan XC-72 (products of Cabot Company), Super P (products of Timcal Company), and the like.

The conductive agent may be included in an amount of 0.5 wt% to 10 wt% based on the total weight of the solid content in the negative electrode slurry.

The solid content in the negative electrode slurry may be 20 wt% to 70 wt%, and preferably, 30 wt% to 50 wt%. In a case in which the solid content in the negative electrode slurry is less than 30 wt%, processing costs may increase due to a decrease in electrode loading amount, electrode adhesion may be reduced due to the occurrence of binder migration, and coating defects may occur. In a case in which the solid content in the negative electrode slurry is greater than 70 wt%, since viscosity of the negative electrode slurry is excessively increased, processability may be reduced and coating defects may occur.

### <Negative Electrode>

In addition, according to still another aspect of the present invention, there is provided a negative electrode including a negative electrode active material layer formed by the above-described negative electrode slurry.

Specifically, the negative electrode may be prepared by applying the above-described negative electrode slurry of the present invention and drying to form a negative electrode active material layer. More specifically, the negative electrode active material layer may be formed by a method of coating a negative electrode current collector with the negative electrode slurry and then drying the coated negative electrode current collector, or may be formed by a method of coating the negative electrode slurry on a separate support and then laminating a film separated from the support on the negative electrode current collector. If necessary, the negative electrode active material layer is formed by the above-described method, and a rolling process may then be further performed. In this case, the drying and the rolling may be performed under appropriate conditions in consideration of physical properties of the electrode to be finally prepared, and are not particularly limited.

The negative electrode current collector is not particularly limited so long as it is a material having conductivity without causing adverse chemical changes in the battery, and, for example, copper, stainless steel, aluminum, nickel, titanium, alloys thereof, these materials that are surface-treated with one of carbon, nickel, titanium, silver, or the like, or fired carbon may be used.

The negative electrode current collector may typically have a thickness of 3 µm to 500 µm, and microscopic irregularities may be formed on the surface of the current collector to improve the adhesion of the negative electrode active material. Also, the negative electrode current collector, for example, may be used in various shapes such as that of a film, a sheet, a foil, a net, a porous body, a foam body, a non-woven fabric body, and the like.

### Lithium Secondary Battery

Next, a lithium secondary battery according to the present invention will be described.

The secondary battery according to the present invention includes the above-described negative electrode of the present invention. Specifically, the lithium secondary battery according to the present invention may include: the above-described negative electrode; a positive electrode; a separator interposed between the negative electrode and the positive electrode; and an electrolyte.

Since the negative electrode has been described above, a detailed description thereof will be omitted, and hereinafter, only the other components will be described.

The positive electrode may be one commonly used in the art, and is not particularly limited. For example, the positive electrode may be prepared by applying a positive electrode slurry composition and drying to form a positive electrode active material layer. Specifically, the positive electrode active material layer may be formed by a method of coating the positive electrode slurry composition on a positive electrode current collector and drying the coated positive electrode current collector, or may be formed by a method of coating the positive electrode slurry on a separate support and then laminating a film separated from the support on the positive electrode current collector. If necessary, the positive electrode active material layer is formed by the above-described method, and a rolling process may then be further performed. In this case, the drying and the rolling may be performed under appropriate conditions in consideration of physical properties of the electrode to be finally prepared, and are not particularly limited.

The positive electrode current collector is not particularly limited so long as it is a material having conductivity without causing adverse chemical changes, and, for example, copper, stainless steel, aluminum, nickel, titanium, alloys thereof, these materials that are surface-treated with one of carbon, nickel, titanium, silver, or the like, or fired carbon may be used.

The positive electrode current collector may typically have a thickness of 3 µm to 500 µm, and microscopic irregularities may be formed on the surface of the current collector to improve the adhesion of the positive electrode active material. In addition, the positive electrode current collector, for example, may be used in various shapes such as that of a film, a sheet, a foil, a net, a porous body, a foam body, a non-woven fabric body, and the like.

The positive electrode slurry composition includes a positive electrode active material, a binder, and a solvent, and may further include a conductive agent and an additive, if necessary.

As the positive electrode active material, positive electrode active materials well known in the art may be used without limitation, and, for example, lithium cobalt-based oxide, lithium nickel-based oxide, lithium manganese-based oxide, lithium iron phosphate, lithium nickel manganese cobalt-based oxide, or a combination thereof may be used. Specifically, LiCoO₂, LiNiO₂, LiMn₂O₄, LiCoPO₄, LiFePO₄, and LiNiₐMn_{b}Co_{c}O₂ (where, 0 < a, b, c <1) may be used as the positive electrode active material, but the present invention is not limited thereto.

The binder is for securing adhesion between the active materials or adhesion of the active material to the current collector, wherein common binders used in the art may be used, and types thereof are not particularly limited. The binder may include, for example, polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used.

The binder may be included in an amount of 5 wt% or less, for example, 1 wt% to 3 wt% based on a total solid content in the positive electrode slurry composition. In a case in which the amount of the binder satisfies the above range, excellent electrode adhesion may be achieved while minimizing an increase in resistance of the electrode.

The solvent is for mixing each component in the positive electrode slurry composition and adjusting viscosity, wherein, for example, water, an organic solvent, or a mixture thereof may be used. The organic solvent may include, for example, amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyro lactone, and ε-propiolactone, and any one thereof or a mixture of two or more thereof may be used, but is not limited thereto.

The solvent may be included in an amount such that the solid content in the positive electrode slurry composition is in a range of 30 wt% to 85 wt%, for example, 30 wt% to 80 wt%. In a case in which the solid content in the positive electrode slurry composition is less than 30 wt%, processing costs may increase due to a decrease in electrode loading amount, electrode adhesion may be reduced due to the occurrence of binder migration, and coating defects may occur. In a case in which the solid content in the positive electrode slurry is greater than 85 wt%, since viscosity of the positive electrode slurry composition is excessively increased, processability may be reduced and coating defects may occur.

The conductive agent is a component for further improving conductivity, wherein conductive agents for a secondary battery well known in the art, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used without limitation.

The conductive agent may be included in an amount of 10 wt% or less, preferably 0.1 wt% to 10 wt%, and more preferably 0.1 wt% to 5 wt% based on the total solid content in the positive electrode slurry composition.

The positive electrode current collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode current collector may typically have a thickness of 3 µm to 500 µm, and microscopic irregularities may be formed on the surface of the current collector to improve the adhesion of the positive electrode material. The positive electrode current collector, for example, may be used in various shapes such as a film, a sheet, a foil, a net, a porous body, a foam body, and a non-woven fabric body.

Next, the separator separates the negative electrode and the positive electrode and provides a movement path of lithium ions, wherein any separator may be used as the separator without particular limitation as long as it is typically used in a secondary battery. Specifically, a porous polymer film, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous non-woven fabric, for example, a non-woven fabric formed of high melting point glass fibers or polyethylene terephthalate fibers may be used. Furthermore, a coated separator including a ceramic component or a polymer material may be used in order to secure heat resistance or mechanical strength, and the separator having a single layer or multilayer structure may be optionally used.

Next, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrogenfuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, ethylene carbonate and propylene carbonate, ring-type carbonates among the carbonate-based organic solvents, well dissociate a lithium salt due to high dielectric constants as high-viscosity organic solvents, and thus, the ring-type carbonate may be preferably used. Since an electrolyte having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, any one selected from the group consisting of F⁻, Cl⁻, I⁻, NO3⁻, N(CN)2⁻, BF4⁻, ClO4⁻, PF6⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

The lithium secondary battery may be suitably used in portable devices, such as mobile phones, notebook computers, and digital cameras, and electric cars such as hybrid electric vehicles (HEVs).

Hereinafter, the present invention will be described in more detail with reference to specific examples.

### Examples and Comparative Examples

### Example 1: Preparation of Thickener Dispersion

Distilled water as an aqueous solvent, carboxymethyl cellulose (CMC) having a weight average molecular weight of 2 million as a thickener, and phenoxyethanol as an inhibitor of changes over time were introduced into a mixer (manufacturer: Yoonsung F&C, product name: BTM MIXER), and stirred at a rotation speed of Anchor disper 50 rpm and Homo disper 1,000 rpm at 23 °C for 3 hours to prepare a thickener dispersion.

In this case, the thickener dispersion was included such that the thickener was 2.00 wt%, the inhibitor of changes over time was 0.10 wt%, and the aqueous solvent was the remaining amount. The total weight of the thickener dispersion was 35 kg.

### Examples 2 to 5, and Comparative Examples 1 to 2: Preparation of Thickener Dispersion

The thickener dispersions of Examples 2 to 5 and Comparative Examples 1 to 2 were prepared in the same manner as in Example 1 except that the total weight of the thickener dispersion was 35 kg, and the contents of the thickener, the inhibitor of changes over time, and the aqueous solvent were adjusted as shown in Table 1 below.

**[Table 1]**

| | Thickener (CMC) | Inhibitor of changes over time (phenoxyeth anol) | Aqueous solvent (distilled water) | Weight ratio of thickener:i nhibitor of changes over time |
|---|---|---|---|---|
| | Content (wt%, based on total weight of thickener dispersion) | Content (wt%, based on total weight of thickener dispersion) | Content (wt%, based on total weight of thickener dispersion) | |
| Comparative Example 1 | 2.00 | 0 | 98.00 | 1:0 |
| Comparative Example 2 | 2.00 | 0.02 | 97.98 | 1:0.01 |
| Example 1 | 2.00 | 0.10 | 97.90 | 1:0.05 |
| Example 2 | 2.00 | 0.50 | 97.50 | 1:0.25 |
| Example 3 | 2.00 | 1. 00 | 97.00 | 1:0.5 |
| Example 4 | 2.00 | 1.50 | 96.50 | 1:0.75 |
| Example 5 | 2.00 | 2.00 | 96.00 | 1:1 |
| Comparative Example 3 | 2.00 | 3.60 | 94.40 | 1:1.8 |

### Experimental Examples

### Experimental Example 1: Observation of Viscosity of Thickener Dispersion over Time

The thickener dispersion immediately after the stirring process was completed was defined as the thickener dispersion "immediately after production," and the viscosity change over time immediately after production was observed.

The viscosity was measured using a Brookfield viscometer (manufacturer: Brookfield, product name: DV2T viscometer), and the measurement temperature was 23 °C.

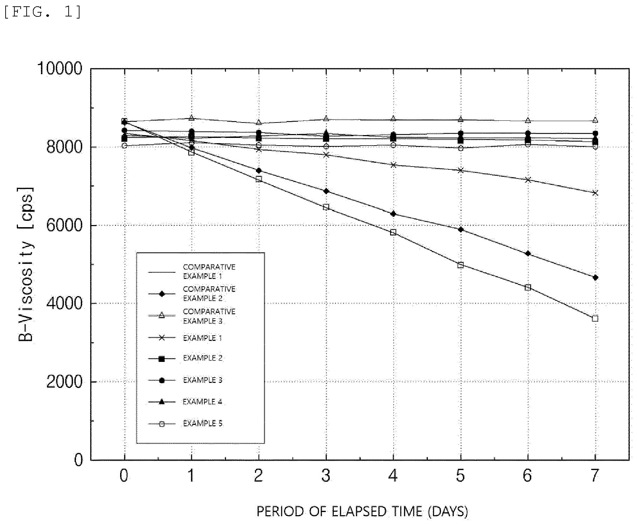

The changes in viscosity depending on the number of days immediately after production of the thickener dispersions of Examples 1 to 5 and Comparative Examples 1 to 3 are shown in Table 2 and FIG. 1.

**[Table 2]**

| | Viscosity (cPs, 23 °C) | | | | | | | |
|---|---|---|---|---|---|---|---|---|
| | Immedi ately after the prepar ation | After 1 day | After 2 days | After 3 days | After 4 days | After 5 days | After 6 days | After 7 days |
| Comparative Example 1 | 8583 | 7860 | 7180 | 6415 | 5761 | 5001 | 4385 | 3604 |
| Comparative Example 2 | 8568 | 7934 | 7328 | 6834 | 6259 | 5876 | 5253 | 4636 |
| Example 1 | 8323 | 8114 | 7923 | 7754 | 7528 | 7357 | 7112 | 6784 |
| Example 2 | 8208 | 8226 | 8180 | 8155 | 8187 | 8128 | 8115 | 8096 |
| Example 3 | 8316 | 8302 | 8291 | 8194 | 8243 | 8276 | 8227 | 8249 |
| Example 4 | 8247 | 8204 | 8196 | 8201 | 8145 | 8174 | 8208 | 8161 |
| Example 5 | 8075 | 8042 | 7997 | 7970 | 8016 | 7944 | 8064 | 7995 |
| Comparative Example 3 | 8604 | 8671 | 8581 | 8634 | 8642 | 8662 | 8624 | 8597 |

In addition, the viscosity change rates (%) at 23 °C between immediately after the production of the thickener dispersion and after 7 days were calculated by Equation 1 below. The calculated viscosity change rate (%) is rounded off to the nearest tenth, and the results are shown in Table 3 below. viscosity change rate (%) = {(viscosity 7 days immediately after production of the thickener dispersion) - (viscosity immediately after production of the thickener dispersion)} / (viscosity immediately after production of the thickener dispersion) × 100

**[Table 3]**

| | Viscosity (cPs, 23 °C) | | Viscosity change rate (%) |
|---|---|---|---|
| | Immediately after the preparation | After 7 days | |
| Comparative Example 1 | 8583 | 3604 | -58.0 |
| Comparative Example 2 | 8568 | 4636 | -45.9 |
| Example 1 | 8323 | 6784 | -18.5 |
| Example 2 | 8208 | 8096 | -1.4 |
| Example 3 | 8316 | 8249 | -0.8 |
| Example 4 | 8247 | 8161 | -1.0 |
| Example 5 | 8075 | 7995 | -1.0 |
| Comparative Example 3 | 8604 | 8597 | -0.1 |

Referring to Table 2, Table 3, and FIG. 1, it may be confirmed that the viscosity of the thickener dispersions of Examples 1 to 5 has very little change over time as compared to Comparative Examples 1 and 2 even after 7 days immediately after the production.

Meanwhile, the thickener dispersion of Comparative Example 3 has little change over time in viscosity, but as will be described later, the adhesion of the negative electrode using the thickener dispersion is low, the energy density of the negative electrode is low, and the resistance is increased, and thus it is not preferable for use.

### Experimental Example 2: Evaluation of Adhesion

### <Manufacture of Negative Electrode>

A negative electrode slurry was prepared by mixing graphite as a negative electrode active material, a styrene-butadiene rubber as a binder, and a thickener dispersion "immediately after production" prepared in Example 1. In this case, the weight ratio of graphite:styrene-butadiene rubber:CMC in the thickener dispersion was 95:3:2. The solid content in the negative electrode slurry was 50 wt%.

The negative electrode slurry was applied on a copper current collector (thickness: 20 µm) as a current collector, dried at 130 °C and rolled to form a negative electrode active material layer (thickness: 80 µm), thereby manufacturing a negative electrode.

In addition, negative electrodes were manufactured in the same manner as described above, except that the thickener dispersion over time was used for the thickener dispersion of Example 1.

In addition, the negative electrodes of Examples 2 to 5 and Comparative Examples 1 to 3 were respectively manufactured in the same manner as described above, except that the thickener dispersions of Examples 2 to 6 and Comparative Examples 1 to 3 were used instead of the thickener dispersion of Example 1.

### <Evaluation of Adhesion>

The negative electrode of Example 1 was punched to a size of 2 cm×15cm using an electrode punching machine, and the punched negative electrode was attached to a slide glass to which a double-sided tape was attached to prepare a sample. Next, the prepared sample was rubbed 15 times using a 2-kg load roller so that the electrode surface was evenly attached to the double-sided tape. Then, the prepared samples were each mounted on a grip of a Universal testing machine (UTM) (LF Plus, manufactured by LLOYD) as an electrode adhesion measuring device, and then a load cell of 5 N (1 lbf) was applied to measure adhesion.

The adhesion of the negative electrodes of Examples 2 to 5 and Comparative Examples 1 to 3 was also measured in the same manner as described above.

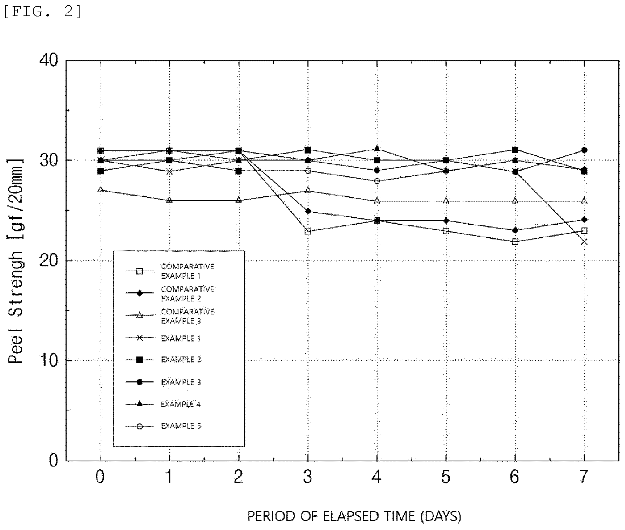

The results are presented in Table 4 and FIG. 2 below.

**[Table 4]**

| | Adhesion (gf/20 mm) | | | | | | | |
|---|---|---|---|---|---|---|---|---|
| | Immedia tely after the prepara tion | After 1 day | After 2 days | After 3 days | After 4 days | After 5 days | After 6 days | After 7 days |
| Comparative Example 1 | 31 | 31 | 30 | 23 | 24 | 23 | 22 | 23 |
| Comparative Example 2 | 31 | 31 | 31 | 25 | 24 | 24 | 23 | 24 |
| Example 1 | 30 | 29 | 30 | 31 | 30 | 30 | 29 | 22 |
| Example 2 | 29 | 30 | 29 | 31 | 30 | 30 | 31 | 29 |
| Example 3 | 30 | 30 | 31 | 30 | 29 | 30 | 29 | 31 |
| Example 4 | 30 | 31 | 30 | 30 | 31 | 29 | 30 | 29 |
| Example 5 | 29 | 30 | 29 | 29 | 28 | 29 | 30 | 29 |
| Comparative Example 3 | 27 | 26 | 26 | 27 | 26 | 26 | 26 | 26 |

Referring to Table 4, in the case of Examples 1 to 5, it may be confirmed that the adhesion of the manufactured negative electrode is not reduced even though the thickener dispersion after a lapse of time after production is used.

However, in the case of Comparative Examples 1 and 2, the viscosity of the thickener dispersion is reduced over time, and the negative electrodes using the thickener dispersion 3 days after the production have decreased adhesion.

In addition, in the case of Comparative Example 3, as described above, the change over time in viscosity of the thickener dispersion is small, but the adhesion itself is low immediately after the production of the thickener compared to Examples, and thus it is not preferable.

### Experimental Example 3: Evaluation of Resistance

### <Preparation of Secondary Battery>

### 1. Preparation of Negative Electrode

A negative electrode slurry was prepared by mixing graphite as a negative electrode active material, a styrene-butadiene rubber as a binder, and a thickener dispersion "7 days after the production" prepared in Example 1. In this case, the weight ratio of graphite:styrene-butadiene rubber:CMC in the thickener dispersion was 95:3:2. The solid content in the negative electrode slurry was 50 wt%.

The negative electrode slurry was applied on a copper current collector (thickness: 20 µm) as a current collector, dried at 130 °C and rolled to form a negative electrode active material layer (thickness: 80 µm), thereby manufacturing a negative electrode.

In addition, the negative electrodes of Examples 2 to 5 and Comparative Examples 1 to 3 were respectively manufactured in the same manner as described above, except that the thickener dispersions "7 days after the production" of Examples 2 to 5 and Comparative Examples 1 to 3 were used instead of the thickener dispersion "7 days after the production" of Example 1.

### 2. Manufacture of Secondary Battery

The negative electrode of Example 1 was prepared as a working electrode, a lithium metal thin film was prepared as a counter electrode, and a polyethylene separator was interposed between the negative electrode and the lithium metal thin film to prepare an electrode assembly.

The electrode assembly was embedded in a coin-type case, and a non-aqueous electrolyte was injected thereto to manufacture a half-cell secondary battery of Example 1.

In this case, the used non-aqueous electrolyte was obtained by adding vinylene carbonate (0.5 wt% of the weight of the non-aqueous electrolyte) as an additive and LiPF₆ (included so as to be the concentration of 1.0 M in the non-aqueous electrolyte) as a lithium salt to an organic solvent mixed with ethylene carbonate (EC) and ethylmethyl carbonate (EMC) in a volume ratio of 7:3.

Half-cell secondary batteries of Examples 2 to 5 and Comparative Examples 1 to 3 were manufactured in the same manner as described above, except that the negative electrodes of Examples 2 to 5 and Comparative Examples 1 to 3 were used, respectively, instead of the negative electrode of Example 1.

### <Evaluation of Discharge Resistance>

The half-cell secondary batteries of Examples 1 to 5 and Comparative Examples 1 to 3 as manufactured above were discharged at 1.5 C for 10 seconds in a state of charge (SOC) 50%, and then the discharge resistance was measured. The results thereof are presented in Table 5 below.

**[Table 5]**

| | Discharge resistance (Ohm, 10sec) |
|---|---|
| Comparative Example 1 | 7.0 |
| Comparative Example 2 | 7.4 |
| Example 1 | 7.2 |
| Example 2 | 6.8 |
| Example 3 | 7.1 |
| Example 4 | 7.5 |
| Example 5 | 8.2 |
| Comparative Example 3 | 19.3 |

Referring to Table 5, it may be confirmed that the secondary batteries of Examples 1 to 5 exhibit excellent discharge resistance.

However, Comparative Example 3 is not good because the resistance is very high due to excessive addition of the inhibitor of changes over time.

Meanwhile, Comparative Examples 1 and 2 show the same level of resistance as Examples, but as described above, Comparative Examples 1 and 2 are not preferable because the change over time of the used thickener dispersion occurs, and the adhesion of the negative electrode is low.

## Claims

1. A thickener dispersion comprising:
a thickener comprising at least one among carboxymethyl cellulose and metal salt of the carboxymethyl cellulose;
a change-over-time inhibitor; and
an aqueous solvent,
wherein the change-over-time inhibitor comprises at least one selected from the group consisting of phenoxyethanol, sodium azide, paraben, formaldehyde, 5-chloro-2-methyl-4-isothiazolin-3-one, sodium benzoate, ethylhexylglycerin, and 1,2-hexanediol,
the thickener is comprised in an amount of 0.05 wt% to 3.5 wt% in the thickener dispersion, and
the change-over-time inhibitor is comprised in an amount of 0.05 wt% to 3.0 wt% in the thickener dispersion.

2. The thickener dispersion of claim 1, wherein the change-over-time inhibitor of changes over time comprises at least one selected from the group consisting of phenoxyethanol, sodium azide, and 1,2-hexanediol.

3. The thickener dispersion of claim 1, wherein the change-over-time inhibitor comprises phenoxyethanol.

4. The thickener dispersion of claim 1, wherein the carboxymethyl cellulose has a weight average molecular weight of 1 million to 5 million.

5. The thickener dispersion of claim 1, wherein a weight ratio of the thickener to the change-over-time inhibitor is 1:0.025 to 1:1.25.

6. The thickener dispersion of claim 1, wherein a weight ratio of the thickener to the change-over-time inhibitor is 1:0.15 to 1:1.15.

7. The thickener dispersion of claim 1, wherein a concentration of a solids content in the thickener dispersion is 0.1 wt% to 6.5 wt%.

8. The thickener dispersion of claim 1, wherein a viscosity change rate (%) of the thickener dispersion at 23 °C is -20% to 0%, the viscosity change rate (%) being determined by Equation 1: viscosity change rate (%) = {(viscosity 7 days immediately after production of the thickener dispersion) - (viscosity immediately after production of the thickener dispersion)} / (viscosity immediately after production of the thickener dispersion) × 100.

9. A negative electrode slurry comprising:
a negative electrode active material;
a binder;
the thickener dispersion according to claim 1; and
an aqueous solvent.

10. The negative electrode slurry of claim 9, wherein the negative electrode active material comprises a carbon-based active material.

11. A negative electrode comprising a negative electrode active material layer formed by the negative electrode slurry according to claim 9.

12. A lithium secondary battery comprising:
the negative electrode according to claim 10;
a positive electrode;
a separator interposed between the negative electrode and the positive electrode; and
an electrolyte.
